# EUROPÄISCHE PATENTSCHRIFT

(11) **EP 2 001 895 B1**
(45) Veröffentlichungstag und Bekanntmachung des Hinweises auf die Patenterteilung: **13.08.2014**
(21) Anmeldenummer: 07727700.2
(22) Anmeldetag: 03.04.2007
(51) Int. Cl.: C07F 3/06, C07F 11/00, C07F 19/00, C07B 61/00

(54) **VERFAHREN ZUR SYNTHESE VON ORGANOELEMENTVERBINDUNGEN**
PROCESS FOR SYNTHESIZING ORGANOELEMENTAL COMPOUNDS
PROCEDE DE SYNTHESE DE COMPOSES D'ORGANOELEMENTS

(30) Priorität: 03.04.2006 DE 102006015378
(43) Veröffentlichungstag der Anmeldung: 17.12.2008
(73) Patentinhaber: Ludwig-Maximilians-Universität München, 80539 München (DE)
(72) Erfinder: KNOCHEL, Paul, 81479 Muenchen (DE); GAVRYUSHIN, Andrei, 82110 Germering (DE); MALAKHOV, Vladimir, 81475 Muenchen (DE); KRASOVSKIY, Arkady, Singapore 648927 (SG)
(74) Vertreter: Isarpatent
(86) Internationale Anmeldenummer: PCT/EP2007/053229
(87) Internationale Veröffentlichungsnummer: WO 2007/113294

(56) Entgegenhaltungen:
- EP-A- 1 582 524
- KRASOVSKIY, ARKADY ET AL: "Efficient synthesis of functionalized organozinc compounds by the direct insertion of zinc into organic iodides and bromides" ANGEWANDTE CHEMIE, INTERNATIONAL EDITION , 45(36), 6040-6044 CODEN: ACIEF5; ISSN: 1433-7851, 2006, XP002439618
- SUZUKI, KEISUKE ET AL: "Stereoselective synthesis of L-vinylglycine derivatives" PEPTIDE CHEMISTRY , VOLUME DATE 1994, 32ND, 165-8 CODEN: PECHDP; ISSN: 0388-3698, 1995, XP002439619
- REN, H. ET AL.: "Preparation of cyclic alkenylmagnesium reagents via an iodine/magnesium exchange" CHEMICAL COMMUNICATIONS, Bd. 2005, 2005, Seiten 543-545, XP002439620

## Beschreibung

Die vorliegende Erfindung betrifft ein Verfahren zur Herstellung von Organoelementverbindungen ausgehend von Organohalogenverbindungen, die Organoelementverbindungen selbst sowie die Verwendung der Organoelementverbindungen.

Im folgenden soll das grundlegende Prinzip der Erfindung anhand von Organozinkverbindungen erläutert werden. Die Erfindung soll jedoch nicht auf Organozinkverbindungen beschränkt sein, sondern läßt sich mit vielen weiteren Metallen oder Halbmetallen realisieren.

Organozinkverbindungen sind dank ihrer spezifischen Reaktivität und Toleranz zu vielen funktionellen Gruppen wichtige Ausgangs- oder Zwischenprodukte in der organischen Chemie. Die Herstellung von beispielsweise Organozinkbromiden direkt aus Aryl- und Alkylbromiden ist jedoch bisher durch den Einsatz des verhältnismäßig teuren und wenig stabilen Rieke-Zink oder durch eine Reaktionsdurchführung in reinem Dimethylacetamid (DMAC) als Lösungsmittel stark eingeschränkt.

Bei der Herstellung von Rieke-Zink wird Zinkchlorid mit Lithiumnaphthalin zu einem fein verteilten Zinkpulver reduziert. Dieses Zinkpulver ist aufgrund seiner großen Oberfläche hochreaktiv. Es lässt sich in eine Kohlenstoff-Halogen-Bindung insertieren. Aufgrund seiner hohen Reaktivität kann es jedoch auch mit anderen funktionellen Gruppen, die in einem Molekül vorliegen, reagieren und somit unerwünschte Nebenreaktionen und Nebenprodukte hervorrufen. Eine Isolierung der Organozinkverbindungen ist bisher nicht möglich.

Die Insertion von Magnesium in Kohlenstoff-Halogen-Bindungen ist als Grignard-Reaktion bekannt. Die Löslichkeit von Grignard-Verbindungen kann durch die Zugabe von LithiumIonen verbessert werden, wie es beispielsweise die EP 1 582 524 offenbart. In der EP 1 582 524 wird ein Verfahren zum Austausch eines organischen Rests an einem Magnesium-Ion bereitgestellt. Ähnliche Verfahren zur Herstellung von Organoelementverbindungen liegen für andere Metalle oder Halbmetalle nicht vor.

Es ist daher eine Aufgabe der vorliegenden Erfindung, ein vereinfachtes Verfahren für die Synthese von Organoelementverbindungen ausgehend von Organohalogenverbindungen bereitzustellen. Des Weiteren ist es eine Aufgabe der vorliegenden Erfindung, neuartige Organoelementverbindungen als Reinstoff bzw. in Lösung bereitzustellen. Eine weitere Aufgabe der vorliegenden Erfindung ist es, Verfahren zur Umsetzung der neuartigen Organoelementverbindungen sowie die Produkte der Umsetzung bereitzustellen.

Erfindungsgemäß werden diese Aufgaben durch die Merkmale der unabhängigen Ansprüche gelöst.

Wie die Erfinder der vorliegenden Erfindung kürzlich festgestellt haben, läßt sich eine Reaktion zwischen einem metallischen Element und Organohalogenverbindungen effizient in einer Lösung, die Lithiumionen enthält, durchführen. Funktionelle Gruppen, wie beispielsweise Ester oder Nitrile, werden bei diesem Verfahren toleriert. Das Verfahren ist damit auf eine Vielzahl von organischen Verbindungen anwendbar, die auch unterschiedliche funktionelle Gruppen tragen können.

Die vorliegende Erfindung offenbart ein Verfahren zur Herstellung einer Verbindung der allgemeinen Formel

R¹-M¹-A_{d}-zLiX (**I**)

durch Umsetzen einer Verbindung R¹-A (**III**) mit einem Element M¹ in Gegenwart von LiX, wobei
- R¹: ein substituiertes oder unsubstituiertes C₃-C₂₄ Aryl oder C₃-C₂₄ Heteroaryl, das ein oder mehrere Heteroatome wie B, O, N, S, Se, P oder Si enthält, ein lineares oder verzweigtes, substituiertes oder unsubstituiertes C₁-C₂₀ Alkyl, C₂-C₂₀ Alkenyl oder C₂-C₂₀ Alkinyl, oder ein substituiertes oder unsubstituiertes C₃-C₂₀ Cycloalkyl, oder ein Derivat davon, ist;
- M¹: ein Element ist, ausgewählt aus Mn, Cu, Zn, Sn, In, La, Ce, Nd, Y, Li, Sm, Na, K und Bi;
- A: ein Halogen, ausgewählt aus F, Cl, Br, I; ein Sulphonat (RSO₃-) oder ein Phosphonat (-OP(O)(OR)₂) ist, wobei R wie R¹ definiert ist;
- d: 0 oder 1 ist;
- z: > 0 ist; und
- X: ausgewählt ist aus der Gruppe, bestehend aus F; Cl; Br; CN; SCN; NCO; Hal^{l}Oₖ, wobei k = 3 oder 4 und Hal^{l} ausgewählt ist aus Cl, Br und I; NO₃; BF₄; PF₆; H; ein Carboxylat
der allgemeinen Formel R^{X}CO₂; ein Disilazid der allgemeinen Formel (R^{X}₃Si)₂N; ein Thiolat der allgemeinen Formel SR^{X}; ein Alkoholat der allgemeinen Formel OR^{X}; R^{X}P(O)O₂; oder SCOR^{X}; ein Amin der allgemeinen Formel R^{X}NH; ein Dialkyl- oder Diarylamin der allgemeinen Formel R^{X}₂N, wobei R^{X} wie unten definiert ist oder R^{X}₂N ein cyclisches Alkylamin darstellt; ein Phosphin der allgemeinen Formel PR^{X}₂, wobei R^{X} wie unten definiert ist oder PR^{X}₂ ein cyclisches Phosphin darstellt; OⱼSR^{X}, wobei j = 2 oder 3 ist; oder NOᵣ, wobei r = 2 oder 3 ist; und deren Derivate; wobei R^{X} ein substituiertes oder unsubstituiertes C₄-C₂₄ Aryl oder ein C₃-C₂₄ Heteroaryl, das ein oder mehrere Heteroatome wie B, O, N, S, Se, P, oder Si enthält; ein lineares oder verzweigtes, substituiertes oder unsubsituiertes C₁-C₂₀ Alkyl; C₂-C₂₀ Alkenyl oder C₂-C₂₀ Alkinyl; oder ein substituiertes oder unsubstituiertes C₃-C₂₀ Cycloalkyl; oder deren Derivate; oder H ist. Als Sulfonate werden bevorzugt Tosylat (p-Toluolsulfonat) oder Mesylat (Methansulfonat) verwendet.

Das vorliegende Verfahren besitzt dabei den Vorteil, daß ein Element, insbesondere ein elementares Metall, in beliebiger Form eingesetzt werden kann. Das Element oder Metall kann beispielsweise in Form von Granalien, Spänen, Barren, Blechen oder als Pulver verwendet werden. Durch die Zugabe eines Lithiumsalzes wird eine Umsetzung erleichtert oder ermöglicht. Eine hochfeine Verteilung, wie sie beispielsweise bei Rieke-Zink vorliegt, ist nicht notwendig. Als organische Ausgangsverbindung R¹-A (**III**) kann eine beliebige Verbindung mit einer Kohlenstoff-Halogenbindung verwendet werden. In diese Kohlenstoff-Halogenbindung wird durch das Verfahren der vorliegenden Erfindung das Metall insertiert. Andere, im Molekül vorliegende funktionelle Gruppen werden dabei nicht verändert und stören ihrerseits die Reaktion gemäß der Erfindung nicht. Somit können vielfach funktionalisierte Moleküle bei der Umsetzung gemäß der Erfindung eingesetzt werden. Dies eröffnet den Zugang zu einer Vielzahl unterschiedlich funktionalisierter Moleküle mit einer Kohlenstoff-Element-Halogengruppierung.

Die Zahl d ist gemäss dieses Aspekts der vorliegenden Erfindung 0 oder 1. Der Wert von n richtet sich dabei nach der Valenz des Elements M¹. Die Valenz des Elements M¹ entspricht dabei der Wertigkeit oder der Oxidationszahl. Wird dieser Valenz der Wert v zugeschrieben, so ist d = v - 1. So ist beispielsweise für ein einwertiges Metall M¹ wie Li der Wert von d = 0. Für ein zweiwertiges Metall wie Zn ist entsprechend der Wert von d = 1.

Gemäß eines zweiten Aspekts der vorliegenden Erfindung kann eine Verbindung der allgemeinen Formel

R¹ₘ-M³-Tₙ·zLiX (**II**)

durch Umsetzen einer Verbindung R¹-A (**III**) mit einer M³-haltigen Verbindung in Gegenwart von LiX und in Gegenwart eines elementaren Metalls M² erfolgen. Dabei ist M² ausgewählt aus Li, Na, K, Cs, Mg, Ca, Mn und Zn. R¹, z, A und X sind wie oben definiert, und M³ ist wie oben M¹ definiert, wobei M³ zusätzlich Al, Ti, Mg, B, Si und S sein kann. M³ ist also ausgewählt aus der Gruppe, bestehend aus Al, Mn, Cu, Zn, Sn, Ti, In, La, Ce, Nd, Y, Li, Sm, Bi, Mg, B, Si und S. T ist wie oben A oder X definiert, d.h. T kann aus A und/oder aus X ausgewählt sein, wobei X und T gleich oder unterschiedlich sein können. n ist 0, 1,2, oder 3. m ist 1, 2 oder 3. Ist m = 2 oder m = 3, so sind mehrere Reste R¹ mit einem einzelnen Element M³ verbunden. Diese Reste R¹ können, im Rahmen der obigen Definition von R¹, gleiche oder unterschiedliche Reste sein.

Gemäß dieses Aspekts der vorliegenden Erfindung wird eine Insertions- und Transmetallierungsreaktion in einem einzigen Schritt durchgeführt. Dabei ist das Element M³ der M³-haltigen Verbindung weniger reaktiv als das Metall M². Dadurch können unter milden Bedingungen M³-Elemente in die Verbindung (**III**) eingeführt werden, die für eine direkte Umsetzung andernfalls nicht zugänglich sind. Die Insertionsreaktion kann mit einem leicht zu aktivierenden und reaktiven Metall M² erfolgen. Anschließend wird durch eine Transmetallierungsreaktion bei milden Bedingungen das Element M³ in Form einer M³-haltigen Verbindung in die organische Verbindung eingeführt. Dabei ist es wichtig, dass das Element M³ weniger reaktiv ist als das Element M².

Die M³-haltige Verbindung kann ein Salz, insbesondere ein Metallsalz, eine Organoelementverbindung, insbesondere eine Organometallverbindung, oder auch eine Organoelementsalzverbindung, insbesondere eine Organometallsalzverbindung, sein. Wie bereits oben für M¹ und d erwähnt, hängt n ebenso wie m von der Wertigkeit des Elements M³ ab. Die Begriffe Wertigkeit, Valenz und Oxidationszahl werden in diesem Zusammenhang gleichwertig verwendet. Für die Valenz v von M³ gilt mit den Zahlen n und m die Beziehung v = m+n.

Gemäß eines weiteren Aspekts der vorliegenden Erfindung wird eine Verbindung der allgemeinen Formel R¹ₘ-M³-Tₙ·zLiX (**II**) bereitgestellt, wobei M³, m, n, z, X und T wie oben definiert sind, wobei M³ Mg nicht mit umfasst, und R¹ ein substituiertes oder unsubstituiertes C₃-C₂₄ Aryl oder C₃-C₂₄ Heteroaryl, das ein oder mehrere Heteroatome wie B, O, N, S, Se, P oder Si enthält, oder ein substituiertes oder unsubstituiertes C₃-C₂₀ Cycloalkyl ist.

Gemäß noch eines weiteren Aspekts der vorliegenden Erfindung wird eine Lösung einer Verbindung der allgemeinen Formel R¹ₘ-M³-Tₙ·zLiX (**II**) in einem Lösungsmittel bereitgestellt, wobeiM³, m, n, z, X und T wie oben definiert sind und wobei M³ Mg nicht mit umfasst und R¹ ein substituiertes oder unsubstituiertes C₃-C₂₄ Aryl oder C₃-C₂₄ Heteroaryl, das ein oder mehrere Heteroatome wie B, O, N, S, Se, P oder Si enthält, oder ein substituiertes oder unsubstituiertes C₃-C₂₀ Cycloalkyl ist. Oder, mit anderen Worten, betrifft die vorliegende Erfindung eine Zusammensetzung in Form einer Lösung, die eine Verbindung der Formel (II) in einem Lösungsmittel enthält.

Gemäß eines anderen Aspekts der vorliegenden Erfindung wird eine Umsetzung einer Verbindung der allgemeinen Formel R¹ₘ-M³-Tₙ·zLiX (**II**) mit einem Elektrophil bereitgestellt, wobei R¹, M³, m, n, z, X und T wie oben definiert sind und wobei M³ Mg nicht mit umfasst. Prinzipiell können dabei viele verschiedene Arten von Elektrophilen verwendet werden. Z.B. können die in den folgenden Werken erwähnten Elektrophile eingesetzt werden, ohne jedoch darauf beschränkt zu sein:
a) Handbook of Grignard reagents; edited by Gary S. Silverman and Philip E. Rakita (Chemical industries; v. 64).
b) Grignard reagents New Developments; edited by Herman G. Richey, Jr., **2000**, John Wiley & Sons Ltd.
c) Methoden der Organischen Chemie, Houben-Weyl, Band XIII/2a, Metallorganische Verbindungen Be, Mg, Ca, Sr, Ba, Zn, Cd. **1973**.
d) The chemistry of the metal-carbon bond, vol 4. edited by Frank R. Hartley. 1987, John Wiley & Sons.

Ein Produkt einer Umsetzung eines Elektrophils mit einer Verbindung der allgemeinen Formel R¹ₘ-M³-Tₙ·zLiX (**II**), wobei R¹, M³, m, n, z, X und T wie oben definiert sind, wobei M³ Mg nicht mit umfasst, ist hierin ebenfalls beschrieben. Die möglichen Elektrophile können dabei wiederum aus den oben unter a) bis d) erwähnten Werken ausgewählt werden, sind jedoch nicht darauf beschränkt. Die Verbindungen (**II**) reagieren dabei als Nukleophil. Sie können daher bei Reaktionen Verwendung finden, in denen Nukleophile eingesetzt werden können.

Das Lösungsmittel für die Verfahren der vorliegenden Erfindung sowie für die Lösung und die Umsetzung gemäß der vorliegenden Erfindung kann aus der Gruppe ausgewählt werden, bestehend aus cyclischen, linearen oder verzweigten Mono- oder Polyethern, Thioethern, Aminen, Phosphinen, und deren Derivaten, die ein oder mehrere zusätzliche Heteroatome, ausgewählt aus O, N, S und P enthalten, bevorzugt Tetrahydrofuran (THF), 2-Methyltetrahydrofuran, Dibutylether, Diethylether, tert-Butylmethylether, Dimethoxyethan, Dioxanen, bevorzugt 1,4-Dioxan, Triethylamin, Ethyldiisopropylamin, Dimethylsulfid, Dibutylsulfid; cyclischen und linearen Amiden, bevorzugt N-Methyl-2-pyrrolidon (NMP), N-Ethyl-2-pyrrolidon (NEP), N-Butyl-2-pyrrolidon (NBP), N,N-Dimethylformamid (DMF), N,N-Dimethylacetamid (DMAC); cyclischen, linearen oder verzweigten Alkanen und/oder Alkenen, wobei ein oder mehrere Wasserstoffatome durch Halogen ersetzt sind, bevorzugt Dichlormethan, 1,2-Dichlorethan, CCl₄; Harnstoffderivaten, bevorzugt N,N'-Dimethylpropylenharnstoff (DMPU), N,N,N'N'-Tetramethylharnstoff; aromatischen, heteroaromatischen oder aliphatischen Kohlenwasserstoffen, bevorzugt Benzen, Toluen, Xylen, Pyridin, Pentan, Cyclohexan, Hexan, Heptan; Hexamethylphosphortriamid (HMPA), CS₂; oder Kombinationen davon.

Das Vorliegen von Lithiumionen in der Lösung zur Herstellung der Verbindung der allgemeinen Formel (I) oder in der Lösung selbst, ermöglicht die Umsetzung bzw. die Lösung der Verbindung. Dabei kann ein Lithiumsalz stöchiometrisch zur Organohalogenverbindung (III) eingesetzt werden, wobei z = 1 ist. Es ist jedoch auch möglich, nur Spuren von Lithiumsalz zu verwenden. Dann ist z > 0. Andererseits ist es auch möglich, das Lithiumsalz im Überschuß im Vergleich zur Organohalogenverbindung einzubringen, wobei z dann größer als 1 ist. Bei allen Aspekten der vorliegenden Erfindung ist z bevorzugt im Bereich von 0,01 bis 5, bevorzugter von 0,5 bis 2, noch bevorzugter von 0,9 bis 1,2 und am bevorzugtesten ungefähr 1.

Die gemäß des zweiten Aspekts der vorliegenden Erfindung verwendeten M³-haltigen Verbindungen sind Verbindungen, die ein Metall, Halbmetall oder Nichtmetall M³ beispielsweise in einem Salz, einer kovalenten Verbindung oder einem Komplex enthalten können. Dabei werden bevorzugt Metall-Halogen-Verbindungen, Metall-Alkyl-, Metall-Aryl-, Metall-Alkoxy- oder Metall-Aryloxy-Verbindungen eingesetzt. Besonders bevorzugt verwendete M³-haltige Verbindungen sind MgBr₂, MgCl₂, B(OMe)₃, B(iPrO)₃, BF₃, Et₂AlCl, Si(OMe)₄, SiCl₄, MnCl₂, SnCl₂, ZnCl₂, ZnBr₂, TiCl(O*i*Pr)₃, Ti(OtPr)₄, InCl₃, LaCl₃, CeCl₃, SmCl₃ und NdCl₃. Dabei steht Me für Methyl und *i*Pr für *iso*-Propyl.

Die Konzentration an Lithiumchlorid in der Lösung beträgt bei der vorliegenden Erfindung von 0,01 bis 5 mol/l, bevorzugt von 0,1 bis 4 mol/l. Insbesondere bevorzugt ist eine Konzentration von 0,2 bis 1,5 mol/l. Die Konzentration der M³-haltigen Verbindung beträgt bevorzugt 1 bis 4 mol/l, bevorzugter 1,2 bis 3 mol/l und insbesondere bevorzugt etwa 1,4 mol/l.

Die in der Reaktion eingesetzten elementaren Metalle können durch bekannte Verbindungen aktiviert werden. Dabei können alle Verbindungen eingesetzt werden, von denen bekannt ist, dass sie elementare Metalle für eine Umsetzung aktivieren. Die Elemente M¹ oder M² können beispielsweise durch Verbindungen aktiviert werden, die aus der Gruppe ausgewählt sind, bestehend aus Kupfersalzen, wie beispielsweise CuCl₂, CuBr₂ oder CuSO₄, Nickelsalzen, wie beispielsweise NiCl₂ oder NiSO₄, Eisenverbindungen, wie beispielsweise FeCl₂ oder FeCl₃, Cobaltverbindungen, wie beispielsweise CoCl₂ oder CoSO₄, I₂, C₂H₄Br₂, Cl(CH₂)₂Br, *t*-BuOLi, BCl₃, BF₃, LiBH₄, LiAlH₄, NaAlH₄, Et₃Al, DIBAL-H (Diisobutylaluminium-hydrid), Na[H₂Al(OCH₂CH₂OCH₃)], Me₃SiCl, Et₂Zn, ICl und SnCl₂. Beispielsweise kann Magnesiumspäne mit 2 bis 3 mol-% Me₃SiCl aktiviert werden. Die Reaktionsführung kann bei Raumtemperatur erfolgen.

Wenn im Zusammenhang mit der vorliegenden Erfindung von einem Metall die Rede ist, so sind damit ebenfalls diejenigen Halbmetalle oder Nichtmetalle mit umfasst, die der Reaktion zugänglich sind, beispielsweise Bor, Silizium oder Schwefel. Für M¹ sind die Metalle Zn, Mn, La, Ce, Nd und Sm bevorzugt, wobei Zink besonders bevorzugt ist. Bei der Auswahl für M² sind Li, Mg und Na bevorzugte Metalle. Als bevorzugte Elemente für die Auswahl von M³ gelten Zn, B, Si und Sn.

Die Begriffe Alkyl, Alkenyl und Alkinyl betreffen lineare, cyclische und verzweigte, substituierte und unsubstituierte C₁ bzw. C₂ bis C₂₀ Verbindungen. Bevorzugte Bereiche für diese Verbindungen sind C₁ bis C₁₀, bevorzugt C₁ bis C₅ (niederes Alkyl), für Alkyl bzw. C₂ bis C₁₀, bevorzugt C₂ bis C₅, für Alkenyl oder Alkinyl. Als Cycloalkyl werden lineare oder verzweigte, substituierte oder unsubstituierte C₃ bis C₂₀ Cycloalkane verstanden. Ein bevorzugter Bereich ist C₃ bis C₁₅, und besonders bevorzugt C₃ bis C₈.

Unter Aryl werden substituierte oder unsubstituierte C₃ bis C₂₄ Arylverbindungen verstanden. Heteroaryle sind substituierte oder unsubstituierte C₃ bis C₂₄ Heteroarylverbindungen, die ein oder mehrere Heteroatome wie B, O, N, S, Se, P oder Si enthalten. Bevorzugte Bereiche für beide sind C₄ bis C₁₅ und noch bevorzugter C₄ bis C₁₀.

Wann immer irgendeiner der Reste R, R^{X} oder R¹ durch einen Substituenten subtituiert wird, kann der Substituent durch einen Fachmann aus irgendeinem bekannten Substituenten ausgewählt werden. Ein Fachmann wird einen möglichen Substituenten gemäß seines Fachwissens auswählen und ist in der Lage, einen Substituenten zu wählen, der nicht mit anderen Substituenten wechselwirken wird, die in dem Molekül vorliegen, und der mögliche Reaktionen nicht stören oder während dieser wechselwirken wird, insbesondere nicht bei Reaktionen, die in dieser Anmeldung beschrieben sind. Mögliche Substituenten schließen folgende ein, ohne darauf beschränkt zu sein:
- Halogene, bevorzugt Fluor, Chlor, Brom und Iod;
- Aliphatische, alicyclische, aromatische und heteroaromatische Kohlenwasserstoffe, insbesondere Alkane, Alkene, Alkine, Aryle, Arylidene, Heteroaryle und Heteroarylidene;
- Carbonsäuren einschließlich deren Salze und deren Ester;
- Carbonsäurehalogenide;
- Aliphatische, alicyclische, aromatische oder heteroaromatische Carbonsäureester;
- Aldehyde;
- Aliphatische, alicyclische, aromatische oder heteroaromatische Ketone;
- Alkohole und Alkoholate, einschließlich Hydroxylgruppen;
- Phenole und Phenolate;
- Aliphatische, alicyclische, aromatische oder heteroaromatische Ether;
- Aliphatische, alicyclische, aromatische oder heteroaromatische Peroxide;
- Hydroperoxide;
- Aliphatische, alicyclische, aromatische oder heteroaromatische Amide or Amidine;
- Nitrile;
- Aliphatische, alicyclische, aromatische oder heteroaromatische Amine;
- Aliphatische, alicyclische, aromatische oder heteroaromatische Imine;
- Aliphatische, alicyclische, aromatische oder heteroaromatische Sulfides einschließlich einer Thiolgruppe;
- Sulfonsäuren, einschließlich deren Salze und deren Ester;
- Thiole and Thiolate;
- Phosphonsäuren, einschließlich deren Salze und deren Ester;
- Phosphinsäuren, einschließlich deren Salze und deren Ester;
- Phosphorigsäuren, einschließlich deren Salze und deren Ester;
- Phosphinigsäuren, einschließlich deren Salze und deren Ester;

Die Substituenten können über ein Kohlenstoffatom, ein Sauerstoffatom, ein Stickstoffatom, ein Schwefelatom oder ein Phosphoratom an die Reste gebunden sein. Als Heteroatome, z.B. in Heteroaromaten, werden bevorzugt N, O, S und P verwendet.

Das allen Aspekten der vorliegenden Erfindung zugrunde liegende Prinzip ist die Herstellung oder Verwendung von Organoelementverbindungen in Gegenwart von Lithiumionen. Diese Lithiumionen ermöglichen oder erleichtern die Umsetzung der elementaren Metalle M¹ und M². Zudem wird durch das Vorliegen von Lithiumsalzen in der Reaktionslösung oder der Verbindung gemäß Formel (**I**) die Löslichkeit erhöht und die weitere Umsetzung ermöglicht oder erleichtert.

Die Verbindungen der allgemeinen Formel (**I**) fallen alle unter die allgemeine Formel (**II**). Das Verfahren zur Herstellung der Verbindungen der allgemeinen Formel (**II**) soll dabei Mg, B, Si und S für das Element M³ mit umfassen, wobei Mg bei der Auswahl der Elemente für M³ bei der Verbindung gemäß Formel (**II**) oder bei der Lösung der Verbindung gemäß Formel (**II**) ausgeschlossen sein soll.

Zur erfindungsgemäßen Herstellung von Organoelementverbindungen gemäß der allgemeinen Formel R¹-M¹-A_{d}·zLiX (**I**) wird eine Organoverbindung R¹-A in einem Lösungsmittel mit einem Element, insbesondere einem Metall, in Gegenwart eines Lithiumsalzes umgesetzt. Das Metall kann dabei stöchiometrisch im Verhältnis zur Organoverbindung oder bevorzugt im Überschuss eingesetzt werden. Die Umsetzung kann in einem Temperaturbereich von -90°C bis 100°C, bevorzugt zwischen 0°C und 80°C und insbesondere bevorzugt zwischen 15°C und 60°C erfolgen. Bevorzugt findet eine Umsetzung in einer Inertgasatmosphäre statt. Als Inertgas kann dabei beispielsweise Stickstoff oder Argon verwendet werden.

Bei der Umsetzung mit elementarem Metall kann die Organoelementverbindung gemäß Formel (**I**) oder (**II**) *in situ* weiter mit einem Elektrophil umgesetzt werden. Es ist jedoch auch möglich, die Organoelementverbindung (**I**) oder (**II**) zu isolieren und somit von überschüssigem, elementarem Metall abzutrennen. Wird überschüssiges Metall vor einer weiteren Umsetzung mit einem Elektrophil nicht abgetrennt, so kann das Metall mit einer weiteren, in der organischen Verbindung vorliegenden Kohlenstoff-Halogen-Bindung reagieren. Durch eine entsprechende Verfahrensführung ist es somit möglich, selektiv lediglich eine Kohlenstoff-Halogen-Gruppierung oder mehrere Kohlenstoff-Halogen-Gruppierungen, die in einer organischen Verbindung vorliegen, umzusetzen.

Bei den Verbindungen der Formel (**II**) ist es möglich, dass n = 2 ist. Wenn dies der Fall ist, kann T₂ ein zweiwertiges Anion sein, das aus der Gruppe, bestehend aus Diaminen, Dialkoxiden oder Dithiolen ausgewählt ist. Dabei kann bevorzugt das Diamin die allgemeine Formel R'NH-R-NHR', das Dialkoxid die allgemeine Formel HO-R-OH und der Dithiol die allgemeine Formel HS-R-SH besitzen, wobei R' und R unabhängig voneinander aus der selben Gruppe ausgewählt sind wie R^{X}, wobei R ein zweiwertiger Rest ist. Die Einschränkung für R soll in soweit gelten, als dass dadurch keine chemisch unsinnigen Verbindungen entstehen. Entsprechend ist der bei der Auswahl für R^{X} als Alkylrest bezeichnete Rest bei der Auswahl für R ein Alkandiyl, das Alkenyl ein Akendiyl und das Alkinyl ein Alkindiyl. Ein bevorzugtes Diamin ist CH₃NHCH₂CH₂NHCH₃, und bevorzugte Dialkoxide sind die Dialkoxide der Diole HOCH₂CH₂OH, Binol und 1,2-Diaminocyclohexan.

Sind mehrere Anionen T in der Verbindung (**II**) enthalten, können diese gleich oder auch unterschiedlich sein. Es kann beispielsweise ein Anion aus der Verwendung einer Verbindung (**III**) stammen, und ein weiteres Anion aus der M³-haltigen Verbindung. Daher können die Anionen T unabhängig voneinander ausgewählt werden.

Die Umsetzung von Organohalogenverbindungen mit einem Metall M² in Gegenwart eines Lithiumsalzes und einer M³-haltigen Verbindung *in situ* ermöglicht einen einfachen Zugang zu Verbindungen (**II**) mit Metallen M³, die anderweitig lediglich unter härteten Bedingungen herstellbar sind. Somit wird ein einfacher Zugang zu Verbindungen (**II**) ermöglicht, die sonst lediglich unter erschwerten Bedingungen erhältlich wären.

Durch die Verfahren der vorliegenden Erfindung werden somit Zugänge zu Organoelementverbindungen (**II**) geschaffen, die bisher nicht zugänglich waren.

Im folgenden soll die Durchführung der Erfindung anhand einiger allgemeiner Beispiele erläutert werden, ohne jedoch auf diese Beispiele beschränkt zu sein.

Es ist beispielsweise möglich, metallisches Zink mit Alkylbromiden in THF im Beisein von LiCl bei 50° zu den entsprechenden Alkylzinkbromiden in hoher Ausbeute umzusetzen. Eine allgemeine Arbeitsvorschrift beinhaltet das Erwärmen eines Alkylbromides in einer 0,7 M (gesättigt bei Raumtemperatur) Lösung von Lithiumchlorid in THF mit drei Äquivalenten Zinkpulver. Das Zinkpulver ist dabei mit 2 mol-% CH₂Br₂ und 2-5 mol-% Me₃SiCl aktiviert. Die Umsetzung erfolgt bei 50°C über 2-48 Stunden. Die dabei entstehenden Alkylzinkbromide können mit verschiedenen Elektrophilen abgefangen werden. Dabei können zusätzlich Katalysatoren, wie beispielsweise Palladium, eingesetzt werden, um die Reaktion zu beschleunigen. Die Strukturen und die Ausbeute einiger Produkte, die auf diesem Weg synthetisiert werden können, sind in Schema 1 unten zusammengefasst.

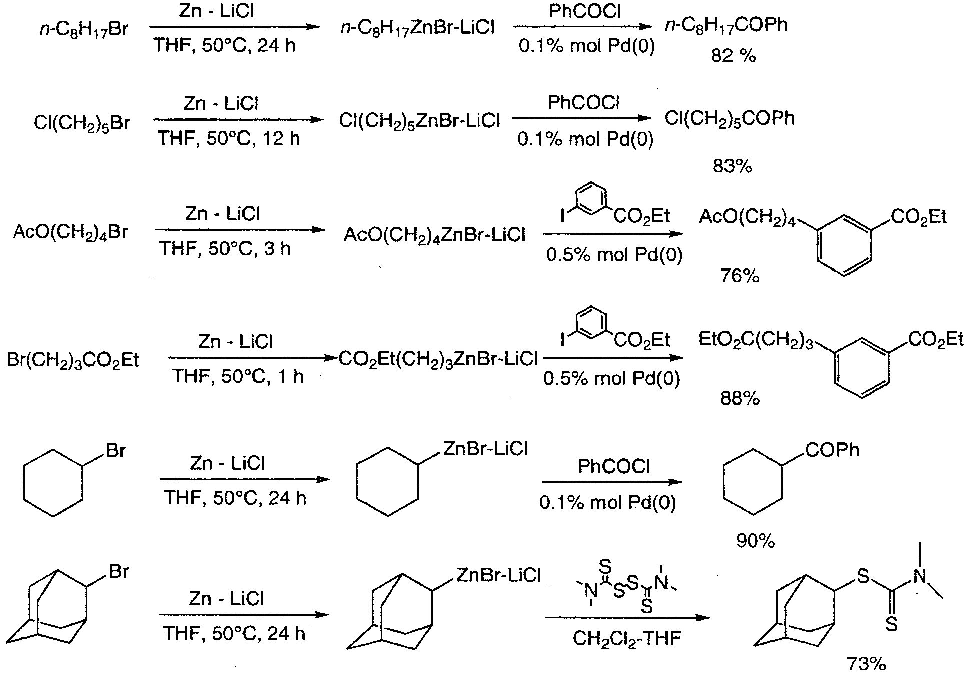

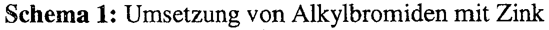

Ebenso ist es möglich, Aryliodide als Ausgangsverbindung zu verwenden. Dabei wird Zink in Anwesenheit von LiCl in die Aryl-Iodbindung insertiert. Eine Auswahl von Verbindungen, die entsprechend der vorliegenden Erfindung synthetisiert werden können, ist in Schema 2 dargestellt. Anschließend werden die zinkorganischen Verbindungen mit einem Elektrophil umgesetzt. Diese Umsetzung erfolgt quantitativ oder zumeist annähernd quantitativ.

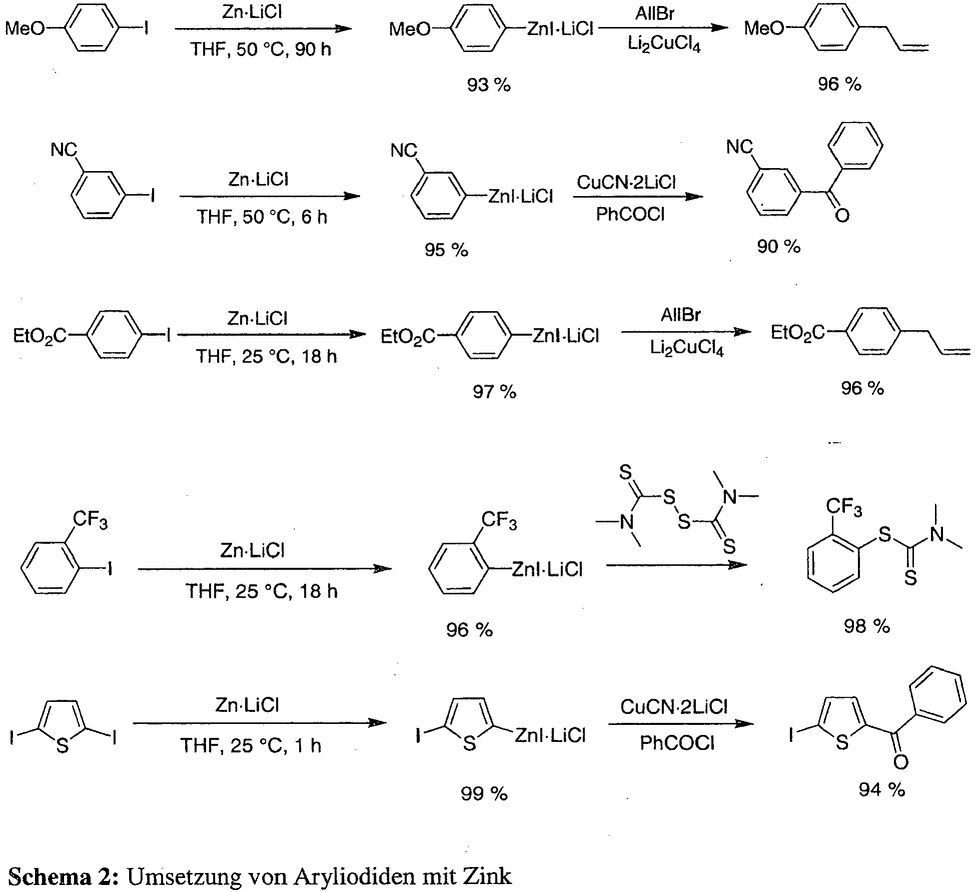

Des Weiteren ist es möglich, die Verbindungen der vorliegenden Erfindung ausgehend von metallhaltigen Verbindungen, wie metallhaltigen Salzen oder Organometallverbindungen, herzustellen. So können beispielsweise Aryl- oder Alkylbromide in Gegenwart von Lithiumchlorid mit metallischem Magnesium und ZnCl₂ in THF direkt zu Aryl- oder Alkylzinkverbindungen umgesetzt werden. Die Konzentration an Lithiumchlorid in der Lösung beträgt dabei von 1 bis 5 mol/l, bevorzugt von 2 bis 4 mol/l. Insbesondere bevorzugt ist eine Konzentration von 2,2 mol/l. Die Konzentration der M³-haltigen Verbindung beträgt bevorzugt 1 bis 4 mol/l, bevorzugter 1,2 bis 3 mol/l und insbesondere bevorzugt etwa 1,4 mol/l. Die verwendeten Metalle können aktiviert werden. Beispielsweise können Magnesiumspäne mit 2 bis 3 mol.-% Me₃SiCl aktiviert werden. Die Reaktionsführung kann bei Raumtemperatur erfolgen. Eine Übersicht über mögliche Reaktionen liefert Schema 3. Auch hier werden wiederum die intermediären zinkorganischen Verbindungen mit einem Elektrophil umgesetzt. Dabei kann das Elektrophil auch wieder ein Halogen sein, wodurch eine Umhalogenierung, wie sie im zweiten Beispiel in Schema 3 dargestellt ist, erreicht werden kann.

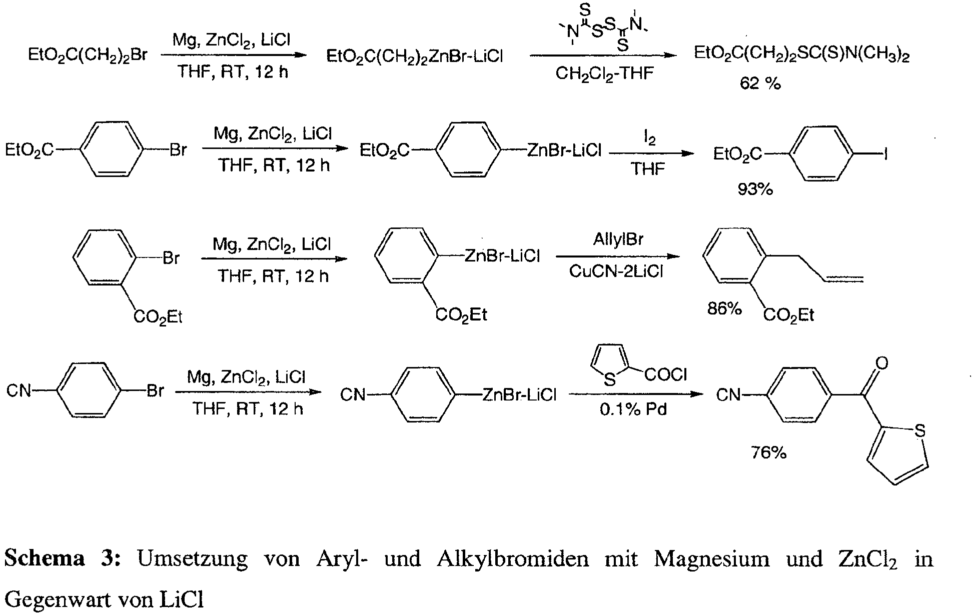

Gemäß einer weiteren Ausführungsform der vorliegenden Erfindung ist es möglich, Organoelementverbindungen in Gegenwart von LiCl ausgehend von Organohalogenverbindungen herzustellen und diese *in situ* durch ein Elektrophil abzufangen. Beispielsweise reagiert 4-Chlorbenzotrifluorid mit Lithium in THF in Gegenwart von Naphthalin (15 mol-%), LiCl und Borsäuretrimethylester zu 4-Trifluormethylphenylborsäure (siehe Schema 4). Die Aufarbeitung des Produktes erfolgt zunächst in basischem Medium, anschließend in saurem Medium, wobei die Ausbeute 42% beträgt.

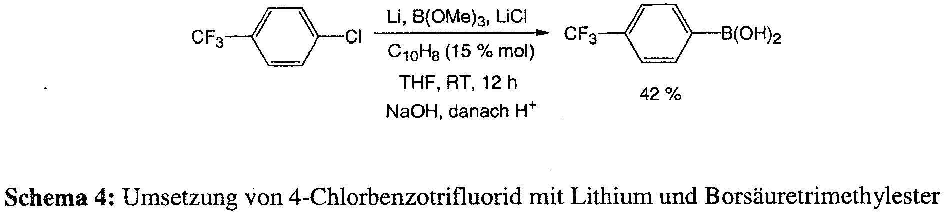

Eine Reaktion von 4-Chlorbenzotrifluorid mit Magnesium in THF in Gegenwart von LiCl und Et₂AlCl liefert die entsprechende Arylaluminiumverbindung in 72% Ausbeute, die anschließend mit Iod oder mit einem anderen Elektrophil *in situ* abgefangen werden kann, wie es in Schema 5 dargestellt ist.

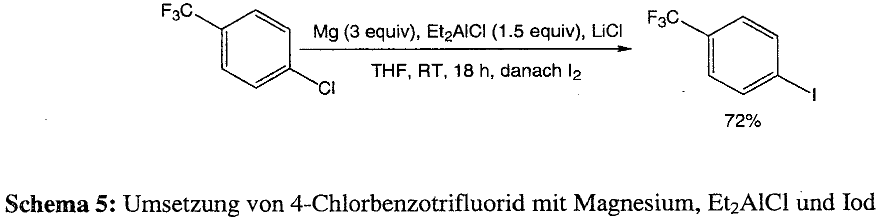

Auch Mangan kann in eine Halogen-Kohlenstoffbindung insertiert werden. Beispielsweise reagiert elementares Mangan mit *n*-Octyliodid unter milden Reaktionsbedingungen bei Raumtemperatur in Gegenwart von Lithiumchlorid zu dem entsprechenden Insertionsprodukt, wie es in Schema 6 dargestellt ist.

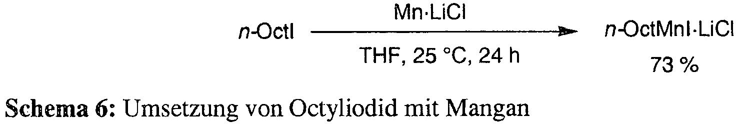

Das oben dargestellte Verfahren kann analog auch auf die Metalle Cu, Bi, Al und In angewandt werden.

Die Umsetzung von mehrfach halogenierten organischen Verbindungen kann selektiv an einer oder an allen Kohlenstoffhalogenbindungen durchgeführt werden. Eine selektive Insertion von Zink in eine einzige Kohlenstoff-Iodbindung kann beispielsweise, wie unten in Schema 7 gezeigt, mittels Zink durchgeführt werden. Die anschließende Transmetallierung mit einer Kupferspezies und die Umsetzung mit Allylbromid (AllBr) ergibt das einfach allylierte Produkt in hoher Ausbeute.

2,5-Diiodthiophen kann mit einem Überschuß an Zink und anschließendem Abdekantieren, um die Lösung von dem restlichen Zink zu trennen, zu dem einfach substituierten Produkt umgesetzt werden. Die zweite Iodsubstitution des Thiophens kann anschließend in einer weiteren Reaktion mit Zink zu einem an 2- und 5-Position unterschiedlich substituierten Thiophen führen. Wird hier jedoch das Zink nach der ersten Umsetzung nicht abdekantiert oder abfiltriert, d.h. aus dem Reaktionsgemisch entfernt, so wird auch die Carbonylgruppe durch das Allylbromid angegriffen. Somit entsteht das zweifach allylierte Produkt.

Wird ausgehend vom 2,5-Diiodthiophen bei der anschließenden Umsetzung die Lösung von dem Zink nicht abdekantiert oder abfiltriert, d.h. das Zink liegt während der gesamten Reaktionsführung im Reaktionsgemisch vor, so erfolgt direkt eine zweifache Substitution des Thiophens.

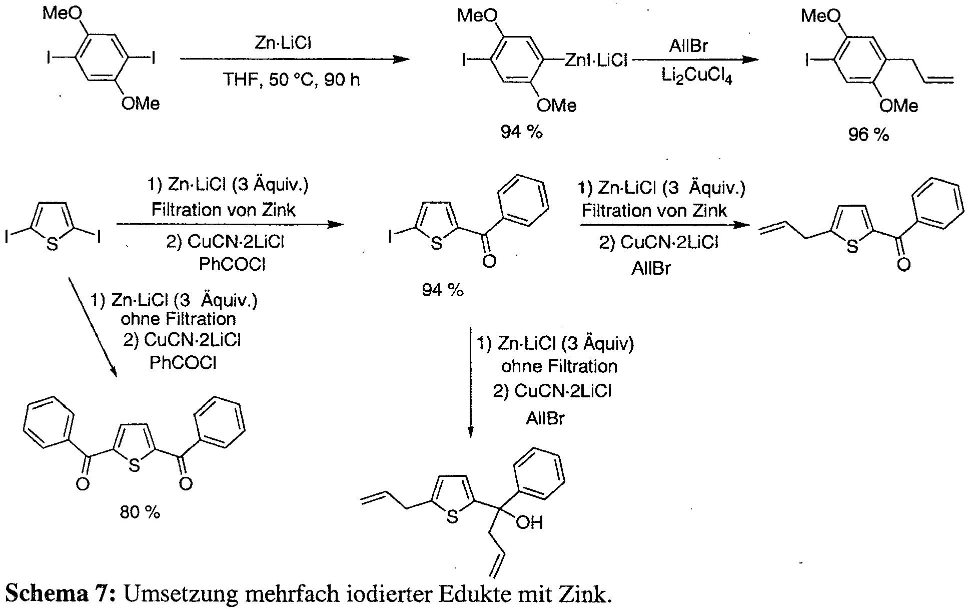

Es ist auch möglich, Zink in Kohlenstoff-Halogen-Bindungen von Azaheterocyclen, wie z.B. Pyridin, Chinolin und Isochinolin, zu insertieren. Die entsprechenden Reaktionen können bei Raumtemperatur durchgeführt werden und führen nach beispielsweise 24 Stunden zu den gewünschten Organozinkverbindungen in Ausbeuten von über 95%. Beispielhafte Verbindungen, die auf diesem Weg erhalten werden können, sind in Schema 8 dargestellt.

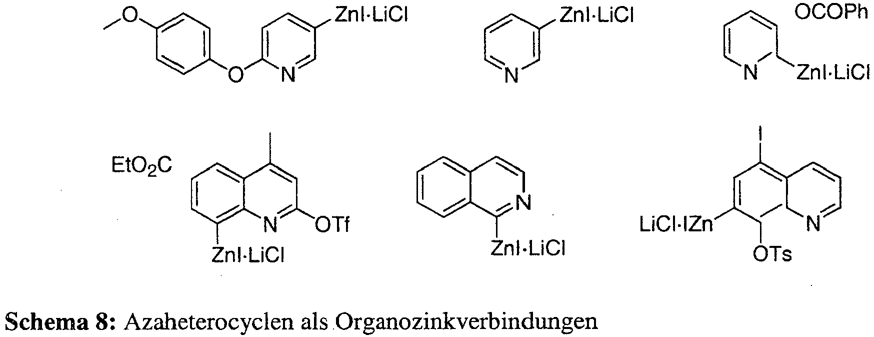

Das neue Verfahren gemäß der Erfindung kann auch für die Synthese von Alkenyl-Zink-Verbindungen verwendet werden. Im Falle von Z-Iodocten wurde das entsprechende Octenylzinkiodid in einer Ausbeute von über 80% erhalten. Die anschließende Umsetzung mit Allylbromid (AllBr) erfolgt nach einer Transmetallierung mit Kupfer in einer Ausbeute von 72%, wie die obere Reaktionsgleichung in Schema 9 zeigt. Das Verhältnis von Z- zu E-Isomer liegt dabei bei 3 zu 1.

Eine Insertion in Kohlenstoff-Halogen-Bindungen von Cyclopropylderivate kann ebenfalls gemäß der vorliegenden Erfindung durchgeführt werden. Obwohl in beiden unten in Schema 9 genannten Fällen eine teilweise Inversion der Konfiguration beobachtet wurde, sind diese Beispiele von großem Interesse, da eine solche Insertion bei derartigen Systemen erstmalig durchgeführt wurde. Analog dem oben genannten Beispiel für Iodocten erfolgt die Umsetzung der Organozinkverbindung mit Allylbromid nach einer Transmetallierung mit Kupfer in einer Ausbeute von 75% (siehe Schema 9).

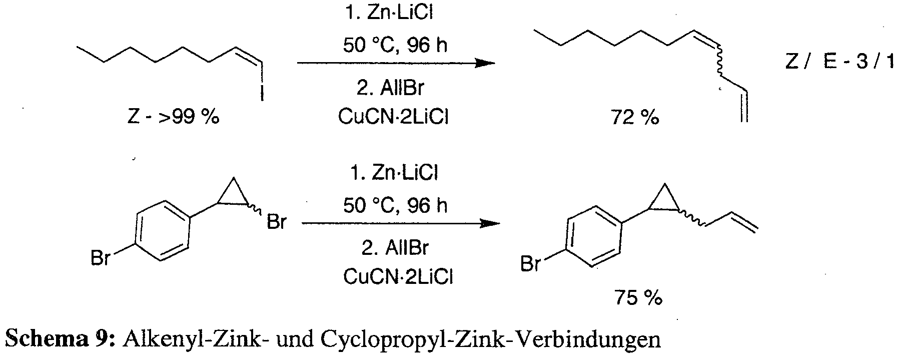

Bei aktivierten Systemen ist es auch möglich, Bromide als Ausgangsmaterialien anstelle der teureren Iodide zu verwenden. Bei asymmetrischen Substraten kann eine regioselektive Insertion erfolgen, wie das folgende Beispiel in Schema 10 zeigt.

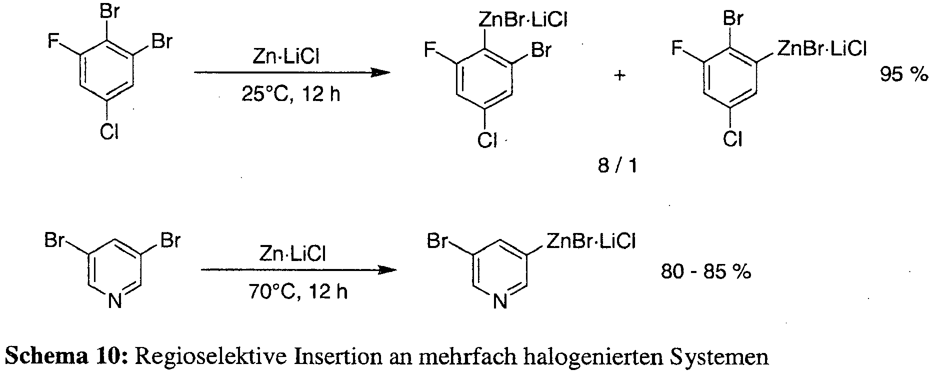

Eine Vielzahl von Dizink-Organoverbindungen kann durch die Insertion von Zn in Gegenwart von Li-Ionen hergestellt werden. Dabei wird in mehrere Iod-Kohlenstoff-Bindungen ein Zink insertiert, wie die Beispiele in Schema 11 zeigen. Andererseits ist es auch möglich, bei mehrwertigen Metallen wie beispielsweise Zink Di- oder Tri-Organo-ElementVerbindungen herzustellen. Wie im 3. Beispiel in Schema 11 dargestellt kann eine Dibromverbindung mit einem einzigen Metall, beispielsweise Zink, reagieren. Aus linearem 1,5-Dibrompentan entsteht so beispielsweise das cyclische Zinkpentan-1,5-diyl, das weiter mit einem Elektrophil wie beispielsweise Acetylchlorid (AcCl) umgesetzt werden kann. Dabei sind zwei Arme des linearen Pentans an ein einziges Zinkatom koordiniert. Aus diesem Beispiel wird also ersichtlich, dass auch mehrere Mono-Halogenverbindungen mit einem einzigen Metall zu Di- oder Tri-Organo-Element-Verbindungen reagieren können.

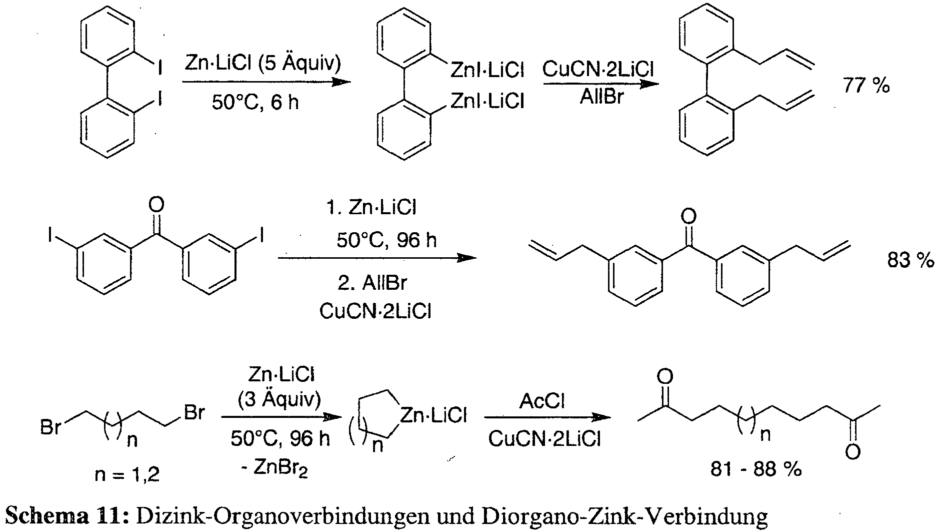

Gemäß einer weiteren Ausführungsform der vorliegenden Erfindung kann die Insertionsreaktion durch die Zugabe von Aminen beschleunigt werden. Daher können Verbindungen, die ursprünglich nicht unter üblichen Reaktionsbedingungen umgesetzt werden konnten, nun der Reaktionsführung gemäß der Erfindung zugänglich gemacht werden. In einer bevorzugten Weiterentwicklung wird die Insertion von Zink durch die Zugabe von Aminen beschleunigt.

Als Amine können beliebige, dem Fachmann bekannte Amine verwendet werden. Diese schließen primäre, sekundäre und tertiäre Amine ein. Insbesondere bevorzugt werden Oligo-und Polyamine verwendet. Insbesondere bevorzugte Amine sind in Schema 12 unten dargestellt.

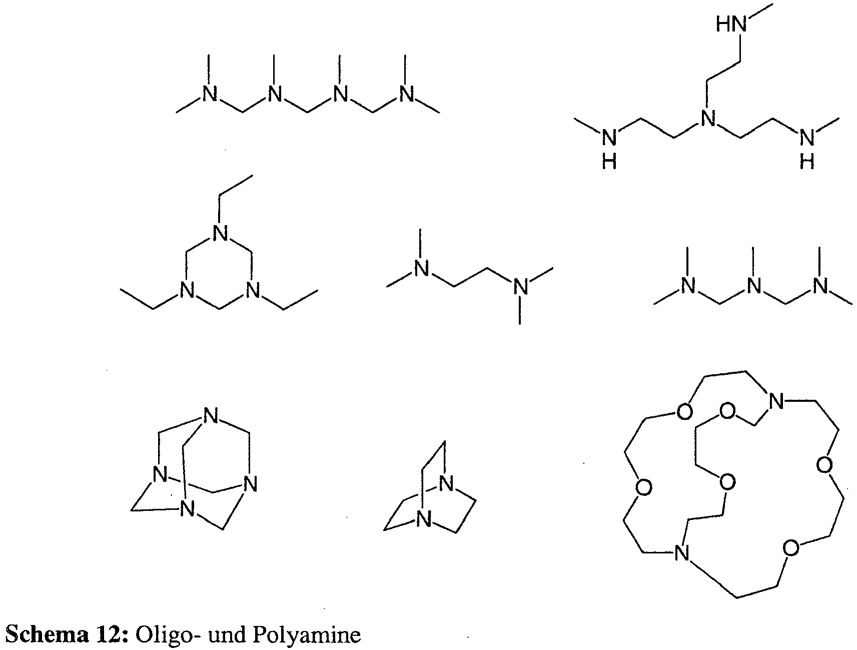

Die Amine können in beliebiger Menge zugegeben werden. Bevorzugt werden die Amine in einer Menge von 0,05 bis 3 Äquivalenten, bevorzugter in einer Menge von 0,15 bis 1,5 Äquivalenten, und am bevorzugtesten von 0,2 bis 1 Äquivalenten, bezogen auf die Menge an zugegebenem Element M¹ und/oder Metall M², insbesondere Zink.

In Tabelle 1 unten sind verschiedene Reagenzien dargestellt, die gemäß der allgemeinen Synthesevorschrift für **3a** umgesetzt worden sind. Dabei zeigt sich eine gute Ausbeute nach Zugabe von N,N,N',N'N"-Pentamethyldiethylenetriamin als Amin ("Amine"). Die Zugabe von CuCN erfolgte, um die unreaktiveren Zink-Spezies katalytisch in eine reaktivere Cu-Spezies umzusezten.

**Tabelle 1. Darstellung und Reaktion von Aryl- und Heteroaryl-funktionalisierten Zink-Reagenzien in Gegenwart von N,N,N',N'N "-Pentamethyldiethylenetriamin ("Amine").**

| Nr. | Zinkreagenz, Ausbeute (%)^{[a]} | Temperatur [°C] | Zeit [h] | Elektrophil | Produkt, Ausbeute (%)^{[b]} |
|---|---|---|---|---|---|
| 1 | 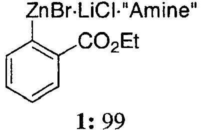 | 50 | 10 | *t*-BuCOCl^{[b]} | 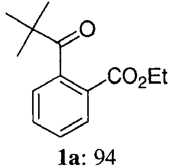 |
| 2 | 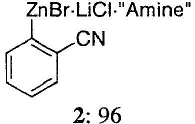 | 50 | 24 | AIIBr^{[a]} | 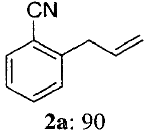 |
| 3 | 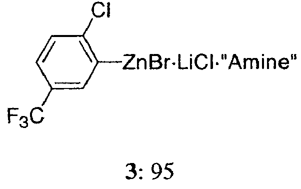 | 50 | 15 | 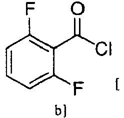 | 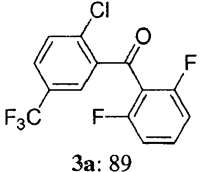 |
| 4 | 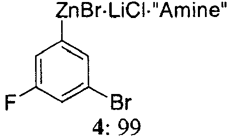 | 50 | 12 | 4-BrPhCOCl^{[b]} | 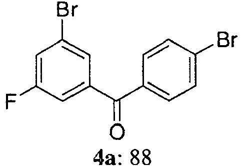 |
| 5 | 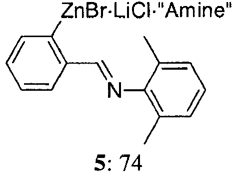 | 50 | 76 | AIIBr^{[a]} | 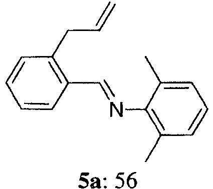 |
| 6 | 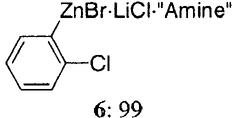 | 50 | 170 | PhCOCl^{[b]} | 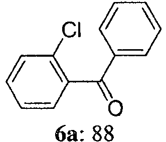 |
| 7 | 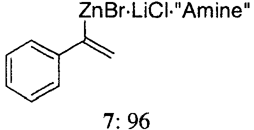 | 50 | 3,5 | AIIBr^{[a]} | 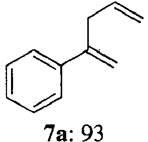 |
| 8 | 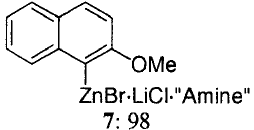 | 50 | 48 | 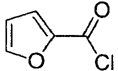 | 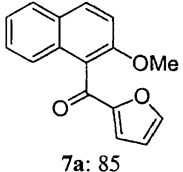 |
| 9 | 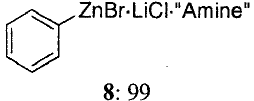 | 50 | 1 | AIIBr^{[a]} | 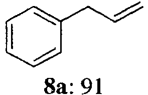 |
| 10 | 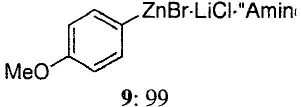 | 50 | 3 | AIIBr^{[a]} | 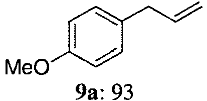 |

| | | | | | |
|---|---|---|---|---|---|
| ^{[a]} 2 mol % CuCN·2LiCl wurde zugegeben. ^{[b]} 30 mol % CuCN·2LiCl wurde zugegeben. (Bu = Butyl, All = Allyl, Ph = Phenyl) | | | | | |

Im folgenden soll die Reaktionsführung anhand von typischen Synthesevorschriften weiter dargestellt werden. Diese Vorschriften sollen als beispielhafte Reaktionsführungen dienen und können von einem Fachmann gemäß seines Fachwissens verändert werden, um andere Reaktionsprodukte herzustellen. Die Reaktionen sollen die Erfindung in keiner Weise beschränken.

### Typische Synthesevorschriften

### Darstellung von 4-Ethoxy-4-oxobutylzinkbromid:

In einem 25 ml Schlenkkolben wird LiCl (636 mg, 15 mmol) vorgelegt und mit einem Heissluftgebläse bei 140°C im Hochvakuum für 10 min vorgetrocknet. Zink-Pulver (981 mg, 15 mmol) sowie trockenes THF (12 ml) und 1,2-Dibromethan (20 µl, 0.225 mmol) werden im Kolben vorgelegt und unter Argon auf 60°C für 1 min vorsichtig erwärmt. Nach Abkühlen auf 35°C wird Me₃SiCl (20 µl, 0.102 mmol) zugegeben und für 15 min stark gerührt. Die Reaktion wird auf 50°C in einem Ölbad temperiert und 4-Brombutansäureethylester (975 mg, 5 mmol) wird langsam durch ein Septum zugegeben. Die Reaktionskontrolle erfolgt per GC. Nach 1 h wird kein Edukt mehr detektiert.

### Darstellung von [4-(Ethoxycarbonyl)phenyl]zinkbromid:

In einem 25 ml Schlenkkolben wird LiCl (636 mg, 15 mmol) vorgelegt und mit einem Heissluftgebläse bei 140°C im Hochvakuum für 10 min vorgetrocknet. Zink-Pulver (981 mg, 15 mmol) sowie trockenes THF (12 ml) und 1,2-Dibromethan (20 µl, 0.225 mmol) werden im Kolben vorgelegt und unter Argon auf 60°C für 1 min vorsichtig erwärmt. Nach Abkühlen auf 35°C wird Me₃SiCl (20 µl, 0.102 mmol) zugegeben und für 15 min stark gerührt. Die Reaktion wird auf 50°C in einem Ölbad temperiert und 4-Brombenzoesäureethylester (1145 mg, 5 mmol) wird langsam durch ein Septum zugegeben. Die Reaktionskontrolle erfolgt per GC. Nach 18 h wird kein Edukt mehr detektiert.

### Herstellung von [2-Chloro-5-(trifluormethyl)phenyl] (2,6-Difluorphenyl)methanon (3a):

Wasserfreies LiCl (16 mmol) wird in einen mit Argon gespülten 25 ml Schlenkkolben eingebracht und über 5 Minuten bei 150-170°C im Hochvakuum (< 1 mbar) getrocknet. Zinkpulver (15 mmol) wird unter Argon zugegeben und der Kolben wird dreimal evakuiert und mit Argon gefüllt. Anschließend wird trockenes THF (10 ml) zugegeben und das Zink mit BrCH₂CH₂Br (5 mol%) und Me₃SiCl (1 mol%) aktiviert. Die Mischung wird auf 50°C erwärmt und dann 2-Brom-1-chlor-4-(trifluormethyl)benzol (5 mmol) in 2 ml trockenem THF mit etwa 10% internem Standard (n-Tetradekan) zugegeben, gefolgt von 5 mmol N,N,N',N'N"-Pentamethyldiethylentetramin. Die Insertionsreaktion ist nach 15 Stunden vervollständigt (Überprüfung durch GC Analyse von Reaktionsaliquoten, wobei die Umsetzung mehr als 99% beträgt). Die Lösung von Brom-[2-chlor-5-(trifluormethyl)phenyl]zink (2,5 mmol, 5,5 ml) wird sorgsam von dem verbleibenden Zinkpulver unter Verwendung einer Spritze abgetrennt und in einen anderen, mit Argon gespülten 10 ml Schlenkkolben überführt. CuCN 2LiCl (0,75 ml einer 1,0 M Lösung in THF, 0,75 mmol, 30 mol%) wird bei -20°C zugegeben, gefolgt von 2,6-Difluorbenzoylchlorid (3,5 mmol). Die Reaktionsmischung wird über 1 Stunde bei 0°C gerührt und dann mit gesättigter wässriger NH₄Cl-Lösung (5 ml) gequenched. Die wässrige Phase wird mit EtOAc (3 x 5 ml) extrahiert und in Vacuo aufkonzentriert. Das Rohprodukt wird mittels Flashchromatographie (PE: Diethylether) gereinigt, wodurch [2-Chlor-5-(trifluormethyl)phenyl]-(2,6-difluor-phenyl)methanon (**3a**; 1,95 mmol, 625 mg, 78%) als weiße Nadeln erhalten werden.

## Patentansprüche

1. Verfahren zur Herstellung einer Verbindung der allgemeinen Formel
R¹-M¹-A_{d}·zLiX (**I**)
durch Umsetzen einer Verbindung R¹-A (**III**) mit einem Element M¹ in Gegenwart von LiX,
wobei
R¹ ein substituiertes oder unsubstituiertes C₃-C₂₄ Aryl oder C₃-C₂₄ Heteroaryl, das ein oder mehrere Heteroatome wie B, O, N, S, Se, P oder Si enthält, ein lineares oder verzweigtes, substituiertes oder unsubstituiertes C₁-C₂₀ Alkyl, C₂-C₂₀ Alkenyl oder C₂-C₂₀ Alkinyl, oder ein substituiertes oder unsubstituiertes C₃-C₂₀ Cycloalkyl, oder deren Derivate, ist;
M¹ ein Element, ausgewählt aus Mn, Cu, Zn, Sn, In, La, Ce, Nd, Y, Li, Sm, Na, K und Bi ist;
A ein Halogen, ausgewählt aus F, Cl, Br, I; oder ein Sulphonat (RSO₃-) oder ein Phosphonat (-OP(O)(OR)₂) ist, wobei R wie R¹ definiert ist.
d 0 oder 1 ist;
z > 0 ist; und
X ausgewählt ist aus der Gruppe, bestehend aus F; Cl; Br; CN; SCN; NCO; Hal¹Oₖ, wobei k = 3 oder 4 und Hal¹ ausgewählt ist aus Cl, Br und I; NO₃; BF₄; PF₆; H; ein Carboxylat der allgemeinen Formel R^{X}CO₂; ein Disilazid der allgemeinen Formel (R^{X}₃Si)₂N; ein Thiolat der allgemeinen Formel SR^{X}; ein Alkoholat der allgemeinen Formel OR^{X}; R^{X}P(O)O₂; oder SCOR^{X}; ein Amin der allgemeinen Formel R^{X}NH; ein Dialkyl- oder Diarylamin der allgemeinen Formel R^{X}₂N, wobei R^{X} wie unten definiert ist oder R^{X}₂N ein cyclisches Alkylamin darstellt; ein Phosphin der allgemeinen Formel PR^{X}₂, wobei R^{X} wie unten definiert ist oder PR^{X}₂ ein cyclisches Phosphin darstellt; OⱼSR^{X}, wobei j = 2 oder 3 ist; oder NOᵣ, wobei r = 2 oder 3 ist; und deren Derivate;
wobei R^{X} ein substituiertes oder unsubstituiertes C₄-C₂₄ Aryl oder ein C₃-C₂₄ Heteroaryl, das ein oder mehrere Heteroatome wie B, O, N, S, Se, P, oder Si enthält; ein lineares oder verzweigtes, substituiertes oder unsubsituiertes C₁-C₂₀ Alkyl; C₂-C₂₀ Alkenyl oder C₂-C₂₀ Alkinyl; oder ein substituiertes oder unsubstituiertes C₃-C₂₀ Cycloalkyl; oder deren Derivate; oder H ist.

2. Verfahren zur Herstellung einer Verbindung der allgemeinen Formel
R¹ₘ-M³-Tₙ·zLiX (**II**)
durch Umsetzen einer Verbindung R¹-A (**III**) mit einer M³-haltigen Verbindung in Gegenwart von LiX und eines elementaren Metalls M²,
wobei
R¹, z, A und X wie in Anspruch 1 definiert sind;
T wie A oder X in Anspruch 1 definiert ist, und wobei X und T gleich oder unterschiedlich sein können;
M³ wie M¹ in Anspruch 1 definiert ist und zusätzlich Ti, Al, Mg, B, Si und S umfasst;
n 0, 1, 2 oder 3 ist;
m 1, 2 oder 3 ist;
M² ein Metall, ausgewählt aus Li, Na, K, Cs, Mg, Ca, Mn und Zn, ist,
und wobei wenn m = 2 oder m = 3, die Reste R¹ gleich oder unterschiedlich sein können.

3. Verfahren nach Anspruch 2, wobei die M³-haltige Verbindung ausgewählt ist Metall-Halogen-Verbindungen, Metall-Alkyl-Verbindungen, Metall-Aryl-Verbindungen, Metall-Alkoxy-Verbindungen oder Metall-Aryloxy-Verbindungen eingesetzt

4. Verfahren nach Anspruch 2 oder 3, wobei die M³-haltige Verbindung ausgewählt ist aus MgBr₂, MgCl₂, B(OMe)₃, B(*i*Pr0)₃, BF₃, Et₂AlCl, Si(OMe)₄, SiCl₄, MnCl₂, SnCl₂, ZnCl₂, ZnBr₂, TiCl(O*i*Pr)₃, Ti(O*i*Pr)₄, InCl₃, LaCl₃, CeCl₃, SmCl₃ und NdCl₃.

5. Verfahren nach einem oder mehreren der vorhergehenden Ansprüche, wobei das Verfahren in einem Lösungsmittel, ausgewählt aus cyclischen, linearen oder verzweigten Mono- oder Polyethern, Thioethern, Aminen, Phosphinen, und deren Derivaten, die ein oder mehrere zusätzliche Heteroatome, ausgewählt aus O, N, S und P enthalten, bevorzugt Tetrahydrofuran (THF), 2-Methyltetrahydrofuran, Dibutylether, Diethylether, tert-Butylmethylether, Dimethoxyethan, Dioxanen, bevorzugt 1,4-Dioxan, Triethylamin, Ethyldiisopropylamin, Dimethylsulfid, Dibutylsulfid; cyclischen und linearen Amiden, bevorzugt N-Methyl-2-pyrrolidon (NMP), N-Ethyl-2-pyrrolidon (NEP), N-Butyl-2-pyrrolidon (NBP), N,N-Dimethylformamid (DMF), N,N-Dimethylacetamid (DMAC); cyclischen, linearen oder verzweigten Alkanen und/oder Alkenen, wobei ein oder mehrere Wasserstoffatome durch Halogen ersetzt sind, bevorzugt Dichlormethan, 1,2-Dichlorethan, CCl₄; Harnstoffderivaten, bevorzugt N,N'-Dimethylpropylenharnstoff (DMPU), N,N,N'N'-Tetramethylharnstoff; aromatischen, heteroaromatischen oder aliphatischen Kohlenwasserstoffen, bevorzugt Benzen, Toluen, Xylen, Pyridin, Pentan, Cyclohexan, Hexan, Heptan; Hexamethylphosphortriamid (HMPA), CS₂; oder Kombinationen davon; durchgeführt wird.

6. Verfahren nach einem oder mehreren der vorhergehenden Ansprüche, **dadurch gekennzeichnet, dass** das elementare Metall M¹ oder M² durch eine Verbindung aktiviert wird, die aus der Gruppe ausgewählt wird, bestehend aus Kupfersalzen, Nickelsalzen, Eisenverbindungen, Cobaltverbindungen, I₂, C₂H₄Br₂, Cl(CH₂)₂Br, *t*-BuOLi, BCl₃, BF₃, LiBH₄, LiAlH₄, NaAlH₄, Et₃Al, DIBAL-H, Na[H₂Al(OCH₂CH₂OCH₃)], Me₃SiCl, Et₂Zn, ICl und SnCl₂.

7. Verfahren nach einem oder mehreren der vorhergehenden Ansprüche, **dadurch gekennzeichnet, dass** M¹ oder M² Zn ist.

8. Verfahren nach einem oder mehreren der vorhergehenden Ansprüche, **dadurch gekennzeichnet, dass** wenn n = 2 ist, T₂ ein zweiwertiges Anion ist, ausgewählt aus der Gruppe, bestehend aus Diaminen, Dialkoxiden oder Dithiolen.

9. Verfahren nach Anspruch 8, **dadurch gekennzeichnet, dass** das Diamin die allgemeine Formel R'NH-R-NHR', das Dialkoxid die allgemeine Formel HO-R-OH und der Dithiol die allgemeine Formel HS-R-SH besitzt, wobei R' und R unabhängig voneinander aus der selben Gruppe ausgewählt sind wie R^{X}, wobei R ein zweiwertiger Rest ist, und bevorzugt CH₃NHCH₂CH₂NHCH₃, HOCH₂CH₂OH, Binol, 1,2-Diaminocyclohexan verwendet werden.

10. Verfahren nach einem oder mehreren der vorhergehenden Ansprüche, **dadurch gekennzeichnet, dass** zusätzlich ein Amin, bevorzugt ein Oligo- oder Polyamin, zugegeben wird.

11. Verfahren nach Anspruch 10, **dadurch gekennzeichnet, dass** das Amin in einer Menge von 0,05 bis 3 Äquivalenten, bevorzugt 0,15 bis 1,5 Äquivalenten, noch bevorzugter 0,2 bis 1 Äquivalenten, bezogen auf das Element M¹ und/oder das Metall M², zugegeben wird.

12. Verbindung der allgemeinen Formel
R¹ₘ-M³-Tₙ·zLiX (**II**)
wobei
z und X wie in Anspruch 1 und n, m, T und M³ wie in Anspruch 2 definiert sind, M³ jedoch nicht Mg umfasst, R¹ ein substituiertes oder unsubstituiertes C₃-C₂₄ Aryl oder C₃-C₂₄ Heteroaryl, das ein oder mehrere Heteroatome wie B, O, N, S, Se, P oder Si enthält, oder ein substituiertes oder unsubstituiertes C₃-C₂₀ Cycloalkyl ist.

13. Lösung einer Verbindung der allgemeinen Formel
R¹ₘ-M³-Tₙ·zLiX (**II**)
wobei z und X wie in Anspruch 1 und n, m, T und M³ wie in Anspruch 2 definiert sind, M³ jedoch nicht Mg umfasst, R¹ ein substituiertes oder unsubstituiertes C₃-C₂₄ Aryl oder C₃-C₂₄ Heteroaryl, das ein oder mehrere Heteroatome wie B, O, N, S, Se, P oder Si enthält, oder ein substituiertes oder unsubstituiertes C₃-C₂₀ Cycloalkyl ist
in einem Lösungsmittel.

14. Lösung gemäß Anspruch 13, wobei das Verfahren in einem Lösungsmittel, ausgewählt aus cyclischen, linearen oder verzweigten Mono- oder Polyethern, Thioethern, Aminen, Phosphinen, und deren Derivaten, die ein oder mehrere zusätzliche Heteroatome, ausgewählt aus O, N, S und P enthalten, bevorzugt Tetrahydrofuran (THF), 2-Methyltetrahydrofuran, Dibutylether, Diethylether, tert-Butylmethylether, Dimethoxyethan, Dioxanen, bevorzugt 1,4-Dioxan, Triethylamin, Ethyldiisopropylamin, Dimethylsulfid, Dibutylsulfid; cyclischen und linearen Amiden, bevorzugt N-Methyl-2-pyrrolidon (NMP), N-Ethyl-2-pyrrolidon (NEP), N-Butyl-2-pyrrolidon (NBP), N,N-Dimethylformamid (DMF), N,N-Dimethylacetamid (DMAC); cyclischen, linearen oder verzweigten Alkanen und/oder Alkenen, wobei ein oder mehrere Wasserstoffatome durch Halogen ersetzt sind, bevorzugt Dichlormethan, 1,2-Dichlorethan, CCl₄; Hamstoffderivaten, bevorzugt N,N'-Dimethylpropylenharnstoff (DMPU), N,N,N'N'-Tetramethylharnstoff; aromatischen, heteroaromatischen oder aliphatischen Kohlenwasserstoffen, bevorzugt Benzen, Toluen, Xylen, Pyridin, Pentan, Cyclohexan, Hexan, Heptan; Hexamethylphosphortriamid (HMPA), CS₂; oder Kombinationen davon; durchgeführt wird.

15. Verwendung einer Verbindung der allgemeinen Formel
R¹ₘ-M³-Tₙ·zLiX (**II**)
wobei z und X wie in Anspruch 1, und n, m, T und M³ wie in Anspruch 2 definiert sind, M³ jedoch nicht Mg umfasst, R¹ ein substituiertes oder unsubstituiertes C₃-C₂₄ Aryl oder C₃-C₂₄ Heteroaryl, das ein oder mehrere Heteroatome wie B, O, N, S, Se, P oder Si enthält, oder ein substituiertes oder unsubstituiertes C₃-C₂₀ Cycloalkyl ist,
in einer Umsetzung mit einem Elektrophil.

## Claims

1. Process for the preparation of a compound of the general formula:
R¹-M¹-A_{d}·zLiX (**I**)
by reaction of a compound R¹-A (**III**) with an element M¹ in the presence of LiX,
wherein
R¹ is a substituted or unsubstituted C₃-C₂₄ aryl or C₃-C₂₄ heteroaryl, which contains one or more hetero atoms, such as B, 0, N, S, Se, P or Si, a linear or branched, substituted or unsubstituted C₁-C₂₀ alkyl, C₂-C₂₀ alkenyl or C₂-C₂₀ alkynyl, or a substituted or unsubstituted C₃-C₂₀ cycloalkyl, or derivatives thereof;
M¹ is an element selected from Mn, Cu, Zn, Sn, In, La, Ce, Nd, Y, Li, Sm, Na, K and Bi;
A is a halogen selected from F, Cl, Br, I; or a sulphonate (RSO₃-) or a phosphonate (-OP(O)(OR)₂), wherein R is defined as R¹;
d is 0 or 1;
Z is > 0; and
X is selected from the group consisting of F; Cl; Br; CN; SCN; NCO; Hal¹Oₖ, wherein k = 3 or 4 and Hal¹ is selected from Cl, Br and I; NO₃; BF₄; PF₆; H; a carboxylate of the general formula R^{x}CO₂; a disilazide of the general formula (R^{x}₃Si)₂N; a thiolate of the general formula SR^{x}; an alcoholate of the general formula OR^{X}; R^{X}P(O)O₂; or SCOR^{X}; an amine of the general formula R^{X}NH; a dialkyl- or diarylamine of the general formula R^{X}₂N, wherein R^{X} is as defined below or R^{X}₂N represents a cyclic alkylamine; a phosphine of the general formula PR^{X}₂, wherein R^{X} is as defined below or PR^{X}₂ represents a cyclic phosphine; OⱼSR^{X}, wherein j = 2 or 3; or NOᵣ, wherein r = 2 or 3; and derivatives thereof;
wherein R^{X} is a substituted or unsubstituted C₄-C₂₄ aryl or a C₃-C₂₄ heteroaryl, which contains one or more hetero atoms, such as B, 0, N, S, Se, P or Si; a linear or branched, substituted or unsubstituted C₁-C₂₀ alkyl; C₂-C₂₀ alkenyl or C₂-C₂₀ alkynyl; or a substituted or unsubstituted C₃-C₂₀ cycloalkyl; or derivatives thereof; or H.

2. Process for the preparation of a compound of the general formula:
R¹ₘ-M³-Tₙ·zLiX (**II**)
by reaction of a compound R¹-A (**III**) with an M³-containing compound in the presence of LiX and an elemental metal M², wherein
R¹, z, A and X are as defined in claim 1;
T is defined as A or X in claim 1, and wherein X and T can be identical or different;
M³ is defined as M¹ in claim 1 and additionally includes Ti, Al, Mg, B, Si and S;
n is 0, 1, 2 or 3;
m is 1, 2 or 3;
M² is a metal selected from Li, Na, K, Cs, Mg, Ca, Mn and Zn;
and wherein if m = 2 or m = 3, the radicals R¹ can be identical or different.

3. Process according to claim 2, wherein the M³-containing compound is selected from metal-halogen compounds, metal-alkyl compounds, metal-aryl compounds, metal-alkoxy compounds or metal-aryloxy compounds.

4. Process according to claim 2 or 3, wherein the M³-containing compound is selected from MgBr₂, MgCl₂, B(OMe)₃, B(*i*PrO)₃, BF₃, Et₂AlCl, Si(OMe)₄, SiCl₄, MnCl₂, SnCl₂, ZnCl₂, ZnBr₂, TiCl(O*i*Pr)₃, Ti(O*i*Pr)₄, InCl₃, LaCl₃, CeCl₃, SmCl₃ and NdCl₃.

5. Process according to one or more of the preceding claims, wherein the process is carried out in a solvent selected from cyclic, linear or branched mono- or polyethers, thioethers, amines, phosphines, and derivatives thereof, which contain one or more additional hetero atoms selected from 0, N, S and P, preferably tetrahydrofuran (THF), 2-methyltetrahydrofuran, dibutyl ether, diethyl ether, tert-butyl methyl ether, dimethoxyethane, dioxanes, preferably 1,4-dioxane, triethylamine, ethyldiisopropylamine, dimethyl sulphide, dibutyl sulphide; cyclic and linear amides, preferably N-methyl-2-pyrrolidone (NMP), N-ethyl-2-pyrrolidone (NEP), N-butyl-2-pyrrolidone (NBP), N,N-dimethylformamide (DMF), N,N-dimethylacetamide (DMAC); cyclic, linear or branched alkanes and/or alkenes, wherein one or more hydrogen atoms are replaced by halogen, preferably methylene chloride, ethylene chloride, CCl₄; urea derivatives, preferably N,N'-dimethylpropyleneurea (DMPU), N,N,N',N'-tetramethylurea; aromatic, heteroaromatic or aliphatic hydrocarbons, preferably benzene, toluene, xylene, pyridine, pentane, cyclohexane, hexane, heptane; hexamethylphosphoramide (HMPA), CS₂; or combinations thereof.

6. Process according to one or more of the preceding claims, **characterized in that** the elemental metal M¹ or M² is activated by a compound which is selected from the group consisting of copper salts, nickel salts, iron compounds, cobalt compounds, I₂, C₂H₄Br₂, Cl(CH₂)₂Br, t-BuOLi, BCl₃, BF₃, LiBH₄, LiAlH₄, NaAlH₄, Et₃Al, DIBAL-H, Na[H₂Al(OCH₂CH₂OCH₃)], Me₃SiCl, Et₂Zn, ICl and SnCl₂.

7. Process according to one or more of the preceding claims, **characterized in that** M¹ or M² is Zn.

8. Process according to one or more of the preceding claims, **characterized in that** if n = 2, T₂ is a divalent anion selected from the group consisting of diamines, dialkoxides or dithiols.

9. Process according to claim 8, **characterized in that** the diamine has the general formula R'NH-R-NHR', the dialkoxide has the general formula HO-R-OH and the dithiol has the general formula HS-R-SH, wherein R' and R independently of each other are selected from the same group as R^{X}, wherein R is a divalent radical, and CH₃NHCH₂CH₂NHCH₃, HOCH₂CH₂OH, binol and 1,2-diaminocyclohexane are preferably used.

10. Process according to one or more of the preceding claims, **characterized in that** an amine, preferably an oligo- or polyamine, is additionally added.

11. Process according to claim 10, **characterized in that** the amine is added in an amount of from 0.05 to 3 equivalents, preferably 0.15 to 1.5 equivalents, still more preferably 0.2 to 1 equivalent, based on the element M¹ and/or the metal M².

12. Compound of the general formula
R¹ₘ-M³-Tₙ·zLiX (II)
wherein
z and X are as defined in claim 1 and n, m, T and M³ are as defined in claim 2, but M³ does not include Mg, and R¹ is a substituted or unsubstituted C₃-C₂₄ aryl or C₃-C₂₄ heteroaryl, which contains one or more hetero atoms, such as B, O, N, S, Se, P or Si, or a substituted or unsubstituted C₃-C₂₀ cycloalkyl.

13. Solution of a compound of the general formula
R¹ₘ-M³-Tₙ-zLiX (**II**)
wherein z and X are as defined in claim 1 and n, m, T and M³ are as defined in claim 2, but M³ does not include Mg, and R¹ is a substituted or unsubstituted C₃-C₂₄ aryl or C₃-C₂₄ heteroaryl, which contains one or more hetero atoms, such as B, O, N, S, Se, P or Si, or a substituted or unsubstituted C₃-C₂₀ cycloalkyl,
in a solvent.

14. Solution according to claim 13, wherein the process is carried out in a solvent selected from cyclic, linear or branched mono- or polyethers, thioethers, amines, phosphines, and derivatives thereof, which contain one or more additional hetero atoms selected from 0, N, S and P, preferably tetrahydrofuran (THF), 2-methyltetrahydrofuran, dibutyl ether, diethyl ether, tert-butyl methyl ether, dimethoxyethane, dioxanes, preferably 1,4-dioxane, triethylamine, ethyldiisopropylamine, dimethyl sulphide, dibutyl sulphide; cyclic and linear amides, preferably N-methyl-2-pyrrolidone (NMP), N-ethyl-2-pyrrolidone (NEP), N-butyl-2-pyrrolidone (NBP), N,N-dimethylformamide (DMF), N,N-dimethylacetamide (DMAC); cyclic, linear or branched alkanes and/or alkenes, wherein one or more hydrogen atoms are replaced by halogen, preferably methylene chloride, ethylene chloride, CCl₄; urea derivatives, preferably N,N'-dimethylpropyleneurea (DMPU), N,N,N',N'-tetramethylurea; aromatic, heteroaromatic or aliphatic hydrocarbons, preferably benzene, toluene, xylene, pyridine, pentane, cyclohexane, hexane, heptane; hexamethylphosphoramide (HMPA), CS₂; or combinations thereof.

15. Use of a compound of the general formula
R¹ₘ-M³-Tₙ·zLiX (**II**)
wherein z and X are as defined in claim 1 and n, m, T and M³ are as defined in claim 2, but M³ does not include Mg, and R¹ is a substituted or unsubstituted C₃-C₂₄ aryl or C₃-C₂₄ heteroaryl, which contains one or more hetero atoms, such as B, 0, N, S, Se, P or Si, or a substituted or unsubstituted C₃-C₂₀ cycloalkyl,
in a reaction with an electrophile.

## Revendications

1. Procédé de préparation d'un composé de formule générale :
R¹-M¹-A_{d}·zLiX (**I**)
par réaction d'un composé R¹-A (**III**) avec un élément M¹ en présence de LiX,
dans lequel
R¹ est un groupe aryle en C₃-C₂₄ ou hétéroaryle en C₃-C₂₄ substitué ou non substitué, qui contient un ou plusieurs hétéroatomes tels que B, 0, N, S, Se, P ou Si, un groupe alkyle en C₁-C₂₀, alcényle en C₂-C₂₀ ou alcynyle en C₂-C₂₀ à chaîne droite ou ramifiée, substitué ou non substitué, ou un groupe cycloalkyle en C₃-C₂₀ substitué ou non substitué, ou un dérivé de ceux-ci ;
M¹ est un élément choisi parmi Mn, Cu, Zn, Sn, In, La, Ce, Nd, Y, Li, Sm, Na, K et Bi ;
A est un halogène choisi parmi F, Cl, Br, I ; ou un sulfonate (RSO₃⁻) ou un phosphonate (-OP(O)(OR)₂), R étant défini comme R¹,
d vaut 0 ou 1 ;
z est > 0 ; et
X est choisi dans le groupe consistant en F ; Cl ; Br ; CN ; SCN ; NOC ; Hal¹Oₖ, où k = 3 ou 4 et Hal¹ est choisi parmi Cl, Br et I ; NO₃ ; BF₄ ; PF₆ ; H ; un carboxylate de formule générale R^{x}CO₂ ; un disilazide de formule générale (R^{X}₃Si)₂N ; un thiolate de formule générale SR^{x} ; un alcoolate de formule générale OR^{x} ; R^{x}P(O)O₂ ; ou SCOR^{x} ; une amine de formule générale R^{x}NH ; une dialkyl- ou une diarylamine de formule générale R^{x}₂N, où R^{x} est tel que défini ci-dessous, ou R^{x}₂N représente une alkylamine cyclique ; une phosphine de formule générale PR^{x}₂, dans laquelle R^{x} est tel que défini ci-dessous, ou PR^{x}₂ représente une phosphine cyclique ; OⱼSR^{x}, où j vaut 2 ou 3 ; ou NOᵣ, où r = 2 ou 3 ; ou les dérivés de ceux-ci ;
R^{x} étant un groupe aryle en C₄-C₂₄ ou hétéroaryle en C₃-C₂₄ substitué ou non substitué, qui contient un ou plusieurs hétéroatomes tels que B, 0, N, S, Se, P ou Si ; un groupe alkyle en C₁-C₂₀, alcényle en C₂-C₂₀ ou alcynyle en C₂-C₂₀ à chaîne droite ou ramifiée, substitué ou non substitué ; ou un groupe cycloalkyle en C₃-C₂₀ substitué ou non substitué ; ou un dérivé de ceux-ci ; ou H.

2. Procédé de préparation d'un composé de formule générale :
R¹ₘ-M³-Tₙ·zLiX (**II**)
par réaction d'un composé R¹-A (**III**) avec un composé contenant M³ en présence de LiX et d'un métal élémentaire M², dans lequel
R¹, z, A et X sont tels que définis dans la revendication 1 ;
T est défini comme A ou X de la revendication 1, et X et T pouvant être identiques ou différents ;
M³ est défini comme M¹ dans la revendication 1 et englobe en outre Ti, Al, Mg, B, Si et S ;
n vaut 0, 1, 2 ou 3 ;
m vaut 1, 2 ou 3 ;
M² est un métal choisi parmi Li, Na, K, Cs, Mg, Ca, Mn et Zn,
les radicaux R¹ pouvant être identiques ou différents quand m = 2 ou m = 3.

3. Procédé selon la revendication 2, dans lequel le composé contenant M³ est choisi parmi les composés halogéno-métalliques, les composés alkyl-métal, les composés aryl-métal, les composés alcoxy-métal ou les composés aryloxy-métal.

4. Procédé selon la revendication 2 ou 3, dans lequel le composé contenant M³ est choisi parmi MgBr₂, MgCl₂, B(OMe)₃, B(iPrO)₃, BF₃, Et₂AlCl, Si(OMe)₄, SiCl₄, MnCl₂, SnCl₂, ZnCl₂, ZnBr₂, TiCl(OiPr)₃, Ti(OiPr)₄, InCl₃, LaCl₃, CeCl₃, SmCl₃ et NdCl₃.

5. Procédé selon l'une ou plusieurs des revendications précédentes, le procédé étant mis en oeuvre dans un solvant choisi parmi les mono- ou les polyéthers cycliques, à chaîne droite ou ramifiée, les thioéthers, les amines, les phosphines et leurs dérivés, qui contiennent un ou plusieurs hétéroatomes supplémentaires choisis parmi O, N, S et P, de préférence le tétrahydrofuranne (THF), le 2-méthyltétrahydrofuranne, le dibutyléther, le diéthyléther, le tert-butylméthyléther, le diméthoxyéthane, les dioxannes, de préférence le 1,4-dioxanne, la triéthylamine, l'éthyldiisopropylamine, le sulfure de diméthyle, le sulfure de dibutyle ; les amides cycliques et linéaires, de préférence la N-méthyl-2-pyrrolidone (NMP), la N-éthyl-2-pyrrolidone (NEP), la N-butyl-2-pyrrolidone (NBP), le N,N-diméthylformamide (DMF), le N,N-diméthylacétamide (DMAC) ; les alcanes et les alcènes cycliques, à chaîne droite ou ramifiée, dans lesquels un ou plusieurs atomes d'hydrogène sont remplacés par des halogènes, de préférence le dichlorométhane, le 1,2-dichloroéthane, le CCl₄; les dérivés de l'urée, de préférence la N,N'-diméthylpropylène-urée (DMPU), la N,N,N',N'-tétraméthylurée ; les hydrocarbures aromatiques, hétéroaromatiques ou aliphatiques, de préférence le benzène, le toluène, le xylène, la pyridine, le pentane, le cyclohexane, l'hexane, l'heptane ; l'hexaméthylphosphorotriamide (HMPA), le CS₂ ; ou les combinaisons de ceux-ci.

6. Procédé selon l'une ou plusieurs des revendications précédentes, **caractérisé en ce que** le métal élémentaire M¹ ou M² est activé par un composé qui est choisi dans le groupe consistant en les sels de cuivre, les sels de nickel, les composés du fer, les composés du cobalt, I₂, C₂H₄Br₂, Cl(CH₂)₂Br, t-BuOLi, BCl₃, BF₃, LiBH₄, LiAlH₄, NaAlH₄, Et₃Al, DIBAL-H, Na[H2_{A}l(OCH₂CH₂OCH₃)], Me₃SiCl, Et₂Zn, ICl et SnCl₂.

7. Procédé selon l'une ou plusieurs des revendications précédentes, **caractérisé en ce que** M¹ ou M² est Zn.

8. Procédé selon l'une ou plusieurs des revendications précédentes, **caractérisé en ce que**, quand n = 2, T₂ est un anion divalent, choisi dans le groupe consistant en les diamines, les dialcoxydes ou les dithiols.

9. Procédé selon la revendication 8, **caractérisé en ce que** la diamine a la formule générale R'NH-R-NHR¹, le dialcoxyde la formule générale HO-R-OH, et le dithiol la formule générale HS-R-SH, R' et R étant choisis indépendamment l'un de l'autre dans le même groupe que R^{x}, R étant un radical divalent, et dans lequel on utilise de préférence CH₃NHCH₂CH₂NHCH₃, HOCH₂CH₂OH, le binol, le 1,2-diaminocyclohexane.

10. Procédé selon l'une ou plusieurs des revendications précédentes, **caractérisé en ce qu'**on ajoute en outre une amine, de préférence une oligo- ou une polyamine.

11. Procédé selon la revendication 10, **caractérisé en ce que** l'amine est ajoutée en une quantité de 0,05 à 3 équivalents, de préférence de 0,15 à 1,5 équivalents, d'une manière encore plus préférée de 0,2 à 1 équivalent, par rapport à l'élément M¹ et/ou au métal M².

12. Composé de formule générale :
R¹ₘ-M³-Tₙ·zLiX (**II**)
dans laquelle z et X sont définis comme dans la revendication 1, et n, m, T et M³ sont définis comme dans la revendication 2, mais cependant M³ ne comprend pas Mg, R¹ est un groupe aryle en C₃-C₂₄ ou hétéroaryle en C₃-C₂₄ substitué ou non substitué, qui contient un ou plusieurs hétéroatomes tels que B, 0, N, S, Se, P ou Si, ou un groupe cycloalkyle en C₃-C₂₀ substitué ou non substitué.

13. Solution d'un composé de formule générale :
R¹ₘ-M³-Tₙ·zLiX (**II**)
dans laquelle z et X sont définis comme dans la revendication 1, et n, m, T et M³ sont définis comme dans la revendication 2, mais cependant M³ ne comprend pas Mg, R¹ est un groupe aryle en C₃-C₂₄ ou hétéroaryle en C₃-C₂₄ substitué ou non substitué, qui contient un ou plusieurs hétéroatomes tels que B, 0, N, S, Se, P ou Si, ou un groupe cycloalkyle en C₃-C₂₀ substitué ou non substitué dans un solvant.

14. Solution selon la revendication 13, le procédé étant mis en oeuvre dans un solvant choisi parmi les mono-ou les polyéthers cycliques, à chaîne droite ou ramifiée, les thioéthers, les amines, les phosphines et leurs dérivés, qui contiennent un ou plusieurs hétéroatomes supplémentaires choisis parmi 0, N, S et P, de préférence le tétrahydrofuranne (THF), le 2-méthyltétrahydrofuranne, le dibutyléther, le diéthyléther, le tert-butylméthyléther, le diméthoxyéthane, les dioxannes, de préférence le 1,4-dioxanne, la triéthylamine, l'éthyldiisopropylamine, le sulfure de diméthyle, le sulfure de dibutyle ; les amides cycliques et linéaires, de préférence la N-méthyl-2-pyrrolidone (NMP), la N-éthyl-2-pyrrolidone (NEP), la N-butyl-2-pyrrolidone (NBP), le N,N-diméthylformamide (DMF), le N,N-diméthylacétamide (DMAC) ; les alcanes et les alcènes cycliques, à chaîne droite ou ramifiée, dans lesquels un ou plusieurs atomes d'hydrogène sont remplacés par des halogènes, de préférence le dichlorométhane, le 1,2-dichloroéthane, le CCl₄ les dérivés de l'urée, de préférence la N,N'-diméthylpropylène-urée (DMPU), la N,N,N',N'-tétraméthylurée ; les hydrocarbures aromatiques, hétéroaromatiques ou aliphatiques, de préférence le benzène, le toluène, le xylène, la pyridine, le pentane, le cyclohexane, l'hexane, l'heptane ; l'hexaméthylphosphorotriamide (HMPA), le CS₂ ; ou les combinaisons de ceux-ci.

15. Utilisation d'un composé de formule générale
R¹ₘ-M³-Tₙ·zLiX (**II**)
dans laquelle z et X sont définis comme dans la revendication 1, et n, m, T et M³ sont définis comme dans la revendication 2, mais cependant M³ ne comprend pas Mg, R¹ est un groupe aryle en C₃-C₂₄ ou hétéroaryle en C₃-C₂₄ substitué ou non substitué, qui contient un ou plusieurs hétéroatomes tels que B, O, N, S, Se, P ou Si, ou un groupe cycloalkyle en C₃-C₂₀ substitué ou non substitué dans une réaction avec un électrophile.
